# EUROPEAN PATENT APPLICATION

(11) **EP 0 743 225 A2**
(43) Date of publication of application: **20.11.1996**
(21) Application number: 96302742.0
(22) Date of filing: 19.04.1996
(51) Int. Cl.: B60N 3/02

(54) **Handle assembly**

(30) Priority: 19.05.1995 GB 9510145
(71) Applicant: Elta Plastics Ltd., Stockton-on-Tees, Cleveland TS18 3RX (GB)
(72) Inventor: Chapman, Paul Nicholas, Great Ayton, Cleveland TS9 6HA (GB)
(74) Representative: Virr, Dennis Austin

(57) **Abstract**

An assembly including a pivotally-supported handle, for example a grab handle for use within a motor vehicle, comprises the handle (10; 30) itself and at least one pivot support member (12; 32) having one or more pivots (11; 31) projecting from it. A socket (14; 34) in the handle is adapted to receive one of the pivots inserted into the socket in a direction transverse to the pivot axis and the pivot is retained in the socket by a retaining means (15).

## Description

The present invention is a handle assembly comprising a handle and one or more pivots upon which the handle is pivotally supported. It may be exemplified by reference to so-called "grab" or "assist" handles, which are provided in motor cars, usually in the rear seat area, for grasping by a seated passenger to stabilise his ride or to assist him in standing from his seated position.

Grab handles of this type are usually pivoted upon their ends by a pair of axially-aligned pivot pins, about which they may be sprung so that they return to a stowed position against the inside roof of the car after use. These handles may take various forms but the assembling together of the handle and pivots usually entails the insertion of the pivot pins in an axial direction into sockets in the handle and in pivot support brackets. This latter step may or may not be easily carried out, depending on the specific design of the handle assembly, but in production activities on the very large scale of motor car manufacture, there is a considerable incentive to eliminate every step which can be eliminated. It would therefore be desirable to devise a handle assembly by which the step of providing a separate pivot pin and inserting it axially into a socket to form the pivot may be avoided.

It is an object of the present invention to provide such a handle assembly.

The handle assembly according to the present invention comprises a handle, at least one pivot support member having projecting therefrom one or more pivots, a socket in said handle adapted to receive a said pivot inserted into said socket in a direction transverse to the axis of said pivot, and retaining means to retain said pivot in said socket. Preferably the handle assembly comprises two said pivot support members and the handle has at least two said sockets, within which the pivots may be retained in axial alignment. The two sockets are preferably provided within the regions of the respective ends of a generally elongate handle.

In a particularly preferred form, the handle assembly comprises two pivot support members, each having projecting therefrom a pair of axially aligned pivots, a generally elongate handle having at each end thereof a pair of sockets, the four sockets of said handle being adapted to receive said pivots in a direction transverse to their axes and to support the pivots in mutual axial alignment, and retaining means to retain the pivots in said alignment in their respective sockets.

The sockets are preferably in the form of linear channels.

The retaining means may advantageously take the form of a member adapted to close off that end of the socket or sockets which receive(s) the pivots(s). Preferably a single retaining member is adapted to close off the sockets of each pivot support member. In a preferred form of the invention, the retaining member is itself positioned by locating it in a channel or channels in the handle, in particular a channel or channels extending generally transverse to the pivot-receiving channel(s).

Although the handle assembly according to the invention has been devised to avoid the operation of assembling it by inserting pivot pins axially into sockets in the pivot supports and handle, some at least of the benefits of the present invention may be achieved if the pivots take the form of discrete pivot pins mounted in the pivot support members and projecting therefrom. In particular, the benefit of inserting the pivots into the sockets in a direction transverse to the pivot axes is still achieved, which makes the assembling together of the handle and pivot support members an easier operation. Nonetheless it is particularly preferred that the pivots be formed integral with the support members, for example by moulding in a suitable plastics material such as a fibre-reinforced nylon.

The invention will now be further described with reference to the accompanying drawings, which illustrate two preferred embodiments of the handle assembly according to the present invention and wherein:-
Fig. 1 is a perspective view of the first form of handle assembly in its stowed position;
Fig. 2 is a perspective view of the handle of Fig. 1 in its position when in use;
Fig. 3 is an exploded perspective view, to a larger scale, of one pivot support member and the associated end of the handle of Figs. 1 and 2;
Fig. 4 is a corresponding view, to a larger scale, of the handle end of Fig. 3; and
Fig. 5 is an exploded enlarged perspective view of one pivot support member and the associated end of the handle of the second form of handle assembly.

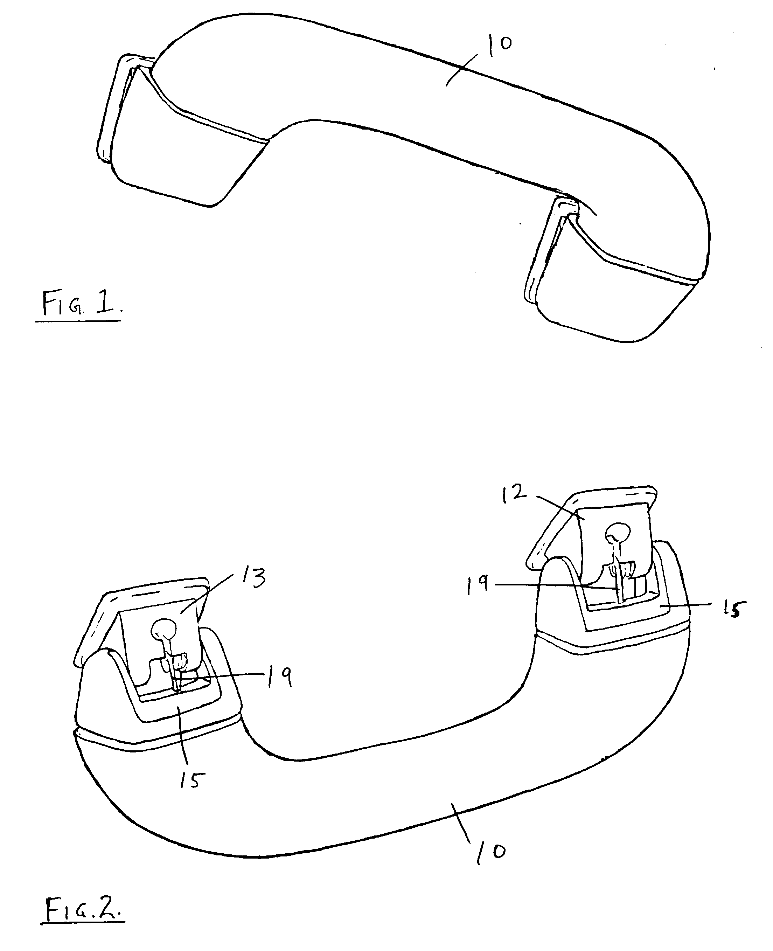

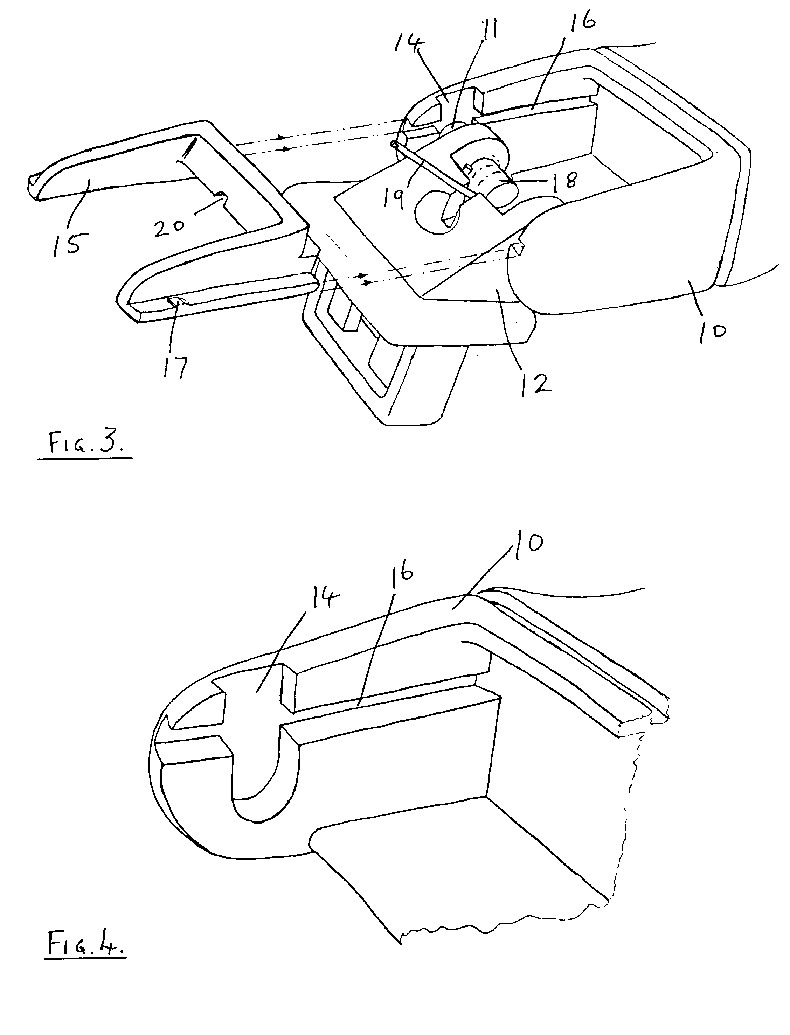

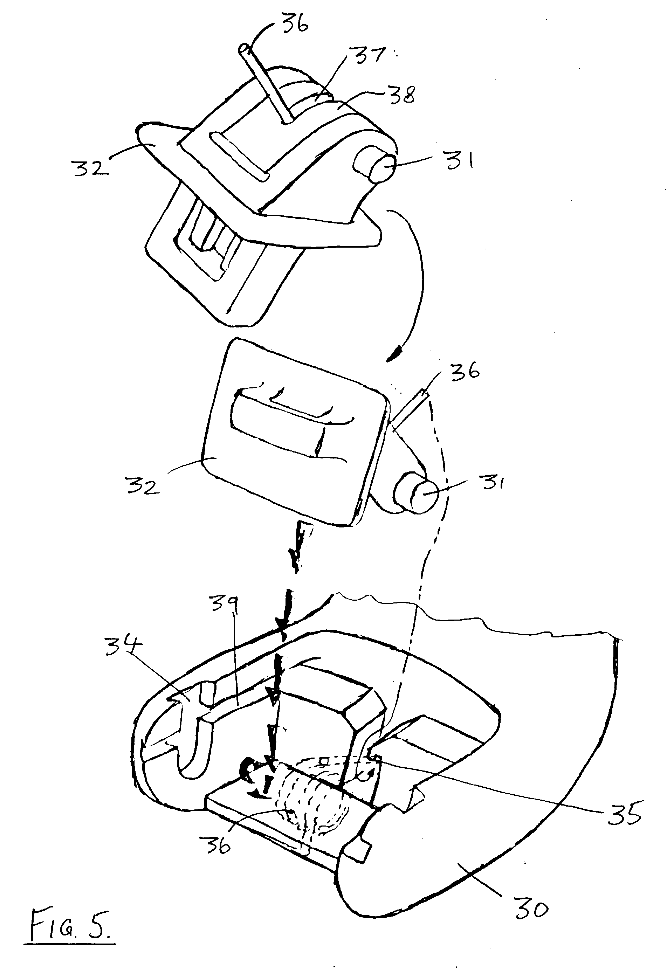

The handle 10 of the handle assembly illustrated in Figs. 1 to 4 is of polypropylene and is pivoted at each of its ends upon four pivots 11 (Fig. 3) extending in axial alignment from two pivot supports 12, 13 secured by means not shown to the interior roof of a car above one of the rear-seat windows. At each end of the handle a mirror-image pair of sockets 14 is formed, into each of which one of a pair of the pivots 11 may be slotted in a direction transverse to the axis of the pivots. As shown in Fig. 4, the inner end of each socket 14 is concavely rounded to provide a support in use for a pivot 11. When the pivots 11 are in place within the corresponding sockets 14, they are retained in place by the insertion of two retainers 15 (one for each pivot support) into linear channels 16 extending inwardly into the handle 10 and intersecting the sockets 11. Each retainer 15, which is generally U-shaped as illustrated, is retained in position in the channels 16 by a clip feature 17 which abuts an inner face of the channels 16.

Extending from each pivot support in alignment with one of the pivots 11 is a boss 18 about which a spring 19 is mounted. One end of the spring (not visible in the drawings) abuts a face of the pivot support 12 while the other, shown in an untensioned position of the spring in Fig. 3, locates in a slot 20 in the underside of the retainer 15 and is tensioned by the retainer as the latter is moved into position along the channels 16. The action of the springs 19 therefore tends to keep the handle in the stowed position shown in Fig. 1; in use, the handle is pivoted downwardly, against the action of the springs, into a position corresponding to that of Fig. 2.

Thus the assembling together of the components of the form of the handle assembly according to the present invention illustrated in Figs. 1 to 4 is carried out very simply by locating a spring 19 around the boss 18, dropping the pivot support into the sockets 14 and sliding the retainer 15 into place, at each end of the handle 10.

The second preferred form of the handle assembly according to the invention, the detail of which is illustrated in Fig. 5, functions in a similar way to the first illustrated embodiment of the invention but differs in detailed design. As shown, the handle 30 has at each end a pair of sockets 34 adapted to receive pivots 31 of a pivot support 32. However the handle is also provided at each end with an undercut slot 35 designed to receive one end of a spring 36.

When the handle 30 is to be fitted to the pivot support 32, the end of the spring 36 is initially retained in a slot 37 in a hinged flap 38 on the pivot support. The support is then placed with the pivots 31 within the sockets 34 and rotated until the free end of the spring engages under the undercut hook formed in the slot 35. The pivot support may now be rotated back into its operating orientation and is retained in place by insertion into channels 39 of a retainer generally similar to the retainer 15 of the first embodiment.

## Claims

1. A handle assembly characterised in that it comprises a handle (10; 30), at least one pivot support member (12; 32) having projecting therefrom one or more pivots (11; 31), a socket (14; 34) in said handle adapted to receive a said pivot inserted into said socket in a direction transverse to the axis of said pivot, and retaining means (15) to retain said pivot in said socket.

2. A handle assembly according to Claim 1, characterised in that it comprises two said pivot support members (12; 32) and a handle (10; 30) having at least two said sockets (14; 34), within which said pivots (11; 31) may be retained in axial alignment.

3. A handle assembly according to Claim 2, characterised in that two said sockets (14; 34) are provided within the regions of the respective ends of a generally elongate handle (10; 30).

4. A handle assembly according to Claim 3, characterised in that it comprises two said pivot support members (12; 32) each having projecting therefrom a pair of axially aligned pivots (11; 31), a generally elongate handle (10; 30) having at each end thereof a pair of said sockets (14; 34), the four sockets of said handle being adapted to receive said pivots in mutual axial alignment, and retaining means (15) to retain the pivots in said alignment in said sockets.

5. A handle assembly according to any of the preceding claims, characterised in that each socket (14; 34) is in the form of a linear channel.

6. A handle assembly according to any of the preceding claims, characterised in that the retaining means (15) is a member adapted to close off that end of the socket (14; 34) which receives the pivot (11; 31).

7. A handle assembly according to Claim 6, characterised by a single retaining member (15) for each pivot support member (12; 32).

8. A handle assembly according to either of Claims 6 and 7, wherein the retaining member (15) is locatable in a channel or channels (16; 39) in the handle (10; 30).

9. A handle assembly according to any of the preceding claims, characterised in that the pivots (11, 31) are formed integral with the support members (12; 32).
